Europäisches Patentamt

European Patent Office

Office européen des brevets

(19)

(11) **EP 1 107 482 A1**

(12) **EUROPEAN PATENT APPLICATION**
published in accordance with Art. 158(3) EPC

(43) Date of publication:
13.06.2001 Bulletin 2001/24

(51) Int Cl.$^7$: **H04B 7/26**

(21) Application number: 00937230.1

(22) Date of filing: 15.06.2000

(86) International application number:
**PCT/JP00/03873**

(87) International publication number:
**WO 01/01607 (04.01.2001 Gazette 2001/01)**

(84) Designated Contracting States:
**AT BE CH CY DE DK ES FI FR GB GR IE IT LI LU MC NL PT SE**
Designated Extension States:
**AL LT LV MK RO SI**

(30) Priority: 23.06.1999 JP 17735999

(71) Applicant: **MATSUSHITA ELECTRIC INDUSTRIAL CO., LTD.**
**Kadoma-shi, Osaka 571-8501 (JP)**

(72) Inventor: **UESUGI, Mitsuru**
**Yokosuka-shi, Kanagawa 238-0048 (JP)**

(74) Representative: **Grünecker, Kinkeldey,**
**Stockmair & Schwanhäusser Anwaltssozietät**
**Maximilianstrasse 58**
**80538 München (DE)**

(54) **TRANSMITTING POWER CONTROL UNIT**

(57)    An SIR estimating section estimates an SIR of a received signal from a demodulating signal. An adding section performs subtraction between a RSIR and a TSIR. A positive/negative determining section performs subtraction between an absolute value of the above calculation result and a threshold value from a threshold value setting section. A positive/negative determining section performs determination of positive/negative of the above subtraction result. A multiplying section performs multiplication processing using the output result from each of the positive/negative determining sections to set TPC bit information. A PTC/PL extracting section extracts a TPC bit and a PL bit from the demodulation signal. An amplitude ratio calculating section calculates an amplitude ratio between the TPC bit and the PL bit. An adding section performs subtraction between the amplitude ratio and the threshold value from the threshold value setting section. A gain setting section sets a step gain in accordance with a difference calculated by the adding section and the determination result obtained by the positive/negative determining section.

FIG.4

## Description

Technical Field

The present invention relates to a transmission power control apparatus in a mobile communication using CDMA.

Background Art

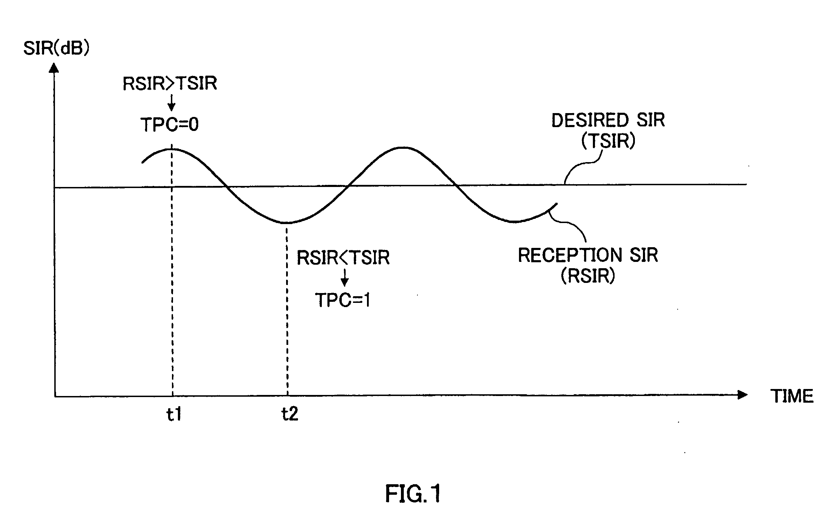

A conventional transmission power control apparatus in a mobile communication will be explained using FIG.1.

Hereinafter, an explanation is given of a case, as an example, in which radio communication between two communication apparatuses, namely, a first communication apparatus having a conventional transmission power control apparatus and a second communication apparatus having the transmission power control apparatus. FIG. 1 is a view showing a receiving state executed by the communication apparatus having the conventional transmission power control apparatus.

The first communication apparatus receives a signal transmitted by the second communication apparatus via a propagation path, and measures an SIR (Signal to Interface Ratio) of the received signal. Moreover, the first communication apparatus sets a content of a TPC bit for instructing the second communication apparatus to increase/decrease transmission power using SIR of the received signal (hereinafter referred to as "RSIR") and a desired SIR (hereinafter referred to as "TSIR").

As shown in FIG. 1, since RSIR>TSIR is established at time tl, the content of TPC bit is set to "0". Conversely, since RSIR<TSIR is established at time t2, the content of TPC bit is set to "1". The first signal transits the signal including the TPC bit, which has been set in this way, to the second communication apparatus.

The second communication apparatus receives the signal transmitted from the first communication apparatus, and changes transmission power based on the TBC bit in the received signal. In other words, when the content of TPC bit in the received signal is "0", the second communication apparatus judges that the instruction from the first communication apparatus is a decrease in transmission power and then decreases a step gain (amount of amplification) of the current transmitting signal by a predetermined amount. Conversely, when the content of TPC bit in the received signal is "1", the second communication apparatus judges that the instruction from the first communication apparatus is an increase in transmission power and then increases the step gain of the current transmitting signal by a predetermined amount.

Thus, the first communication apparatus can maintain the reception quality at a constant level by instructing the second communication apparatus to change transmission power in accordance with the reception state. In addition, similar to the first communication apparatus, the second communication apparatus transmits the signal including the TPC bit to the first communication apparatus, whereby instructing the first communication apparatus to change transmission power.

However, in the communication apparatus, which comprises the conventional transmission power control apparatus, has the problems set forth below. Hereinafter, the aforementioned first communication apparatus and second communication apparatus will be explained as an example.

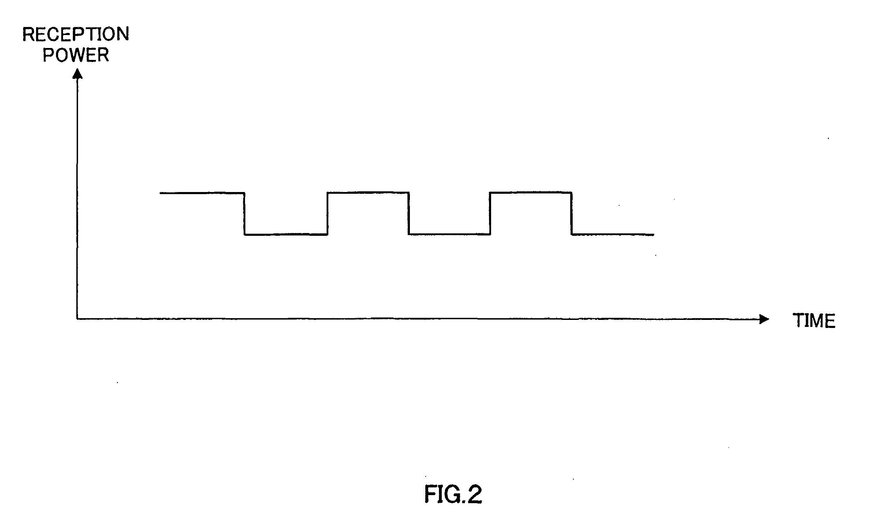

First, the first communication apparatus always transmits the TPC bit, which is set to either "0" or "1", to the second communication apparatus even when RSIR becomes a value (proper value) close to TSIR, with the result that the second communication apparatus always increases/decreases transmission power. For this reason, received power at the first communication apparatus always varies around the proper value and becomes unstable as shown in FIG. 2.

Moreover, the second communication apparatus uses a fixed value as a value of the step gain in controlling a transmission power, namely, an amount of amplification, which is increased/decreased based on the TPC bit in the received signal. However, an optimal value of the step gain differs, depending on a maximum Doppler frequency.

Therefore, if a value, which is larger than the proper value as a step gain, is used, the second communication apparatus controls (excessive control) transmission power to reach a value, which exceeds or drop below the optimal value, and this results in lack of stability of the reception power of the first communication apparatus. On the other hand, if a value, which is smaller than the proper value as a step gain, is used, it is difficult for the second communication apparatus to control transmission power to the optimal value, and this results in an reduction in the adaptability of the reception power of the first communication apparatus to the condition of the propagation path.

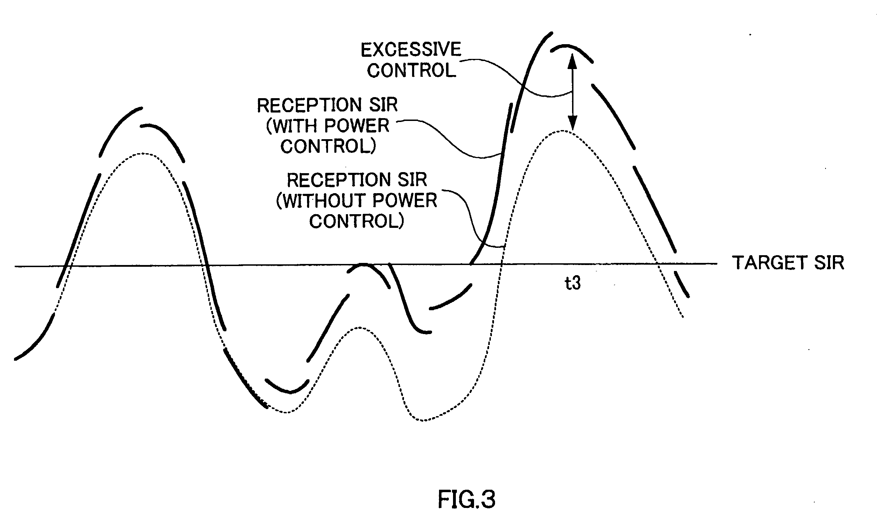

Particularly, in a condition that the maximum Doppler frequency is high-speed, the second communication apparatus cannot adapt transmission power to the optimal value because of control delay even if a large value is used as a step gain. For this reason, the reception power of the first communication apparatus cannot adapt to the condition that the maximum Doppler frequency is high-speed as shown in FIG. 3. For example, at time t3, in a case where the aforementioned power control is made, adaptability of the reception SIR to the condition of the propagation path worsens as compared with a case in which no power control is made, it can be said that excessive control is made. Since such a problem occurs at time t3, there is a case in which a desired average Eb/No to meet a required quality is contrarily deteriorated if power control is performed.

As mentioned above, in the communication apparatus comprising the conventional transmission power control apparatus, there is a case in which reception power becomes unstable by an influence of the maximum Doppler frequency, that is, a channel quality.

Disclosure of Invention

It is an object of the present invention is to provide a transmission power control apparatus that controls reception power and transmission power to an optimal value in accordance with a channel quality.

The above object can be attained by changing an amplification value of a transmitting signal in accordance with certainty of a TPC bit in a received signal and changing an amplitude of a TPC bit to be included in the transmitting signal in accordance with a difference between the reception quality of the received signal and a reference reception quality.

Brief Description of Drawings

FIG. 1 is a view showing a setting state for TPC bit in a communication apparatus having a conventional transmission power control apparatus;

FIG. 2 is a view showing a state of reception power in a case where the maximum Doppler frequency of the communication apparatus, which has a conventional transmission power control apparatus, is low;

FIG. 3 is a view showing a state of reception SIR in a case where the maximum Doppler frequency of the communication apparatus, which has a conventional transmission power control apparatus, is high;

FIG. 4 is a block diagram showing a configuration of a communication apparatus having a transmission power control apparatus according to a first embodiment of the present invention;

FIG. 5 is a block diagram showing a configuration of a communication apparatus having a transmission power control apparatus according to a second embodiment of the present invention; and

FIG. 6 is a block diagram showing a configuration of a communication apparatus having a transmission power control apparatus according to a third embodiment of the present invention.

Best Mode for Carrying Out the Invention

The following will specifically explain the best modes for carrying out the present invention with reference to the drawings.

(First embodiment)

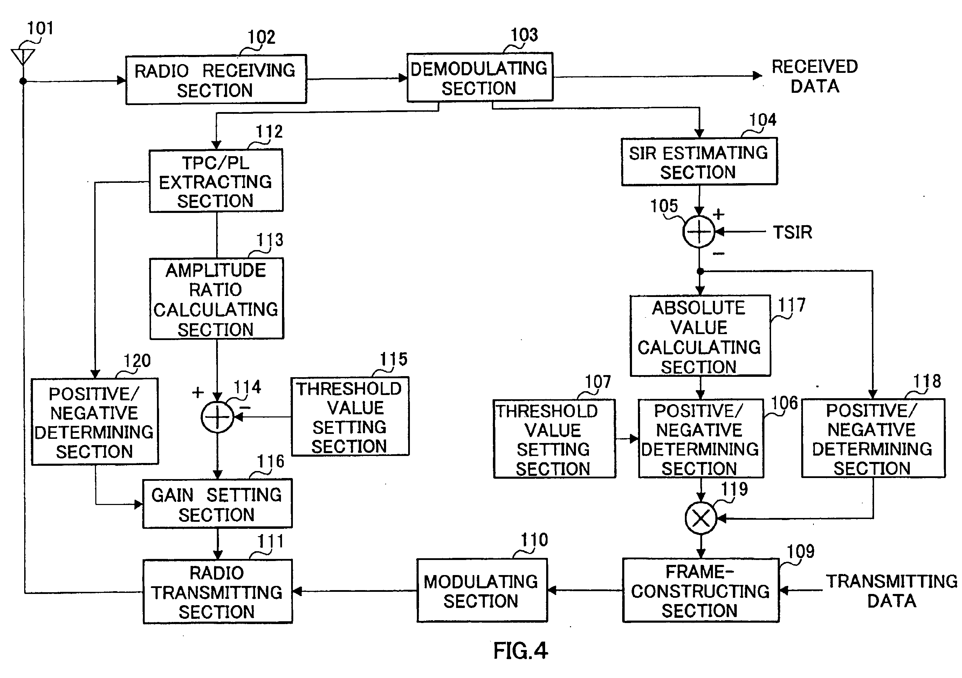

FIG. 4 is a block diagram showing a configuration of a communication apparatus having a transmission power control apparatus according to a first embodiment of the present invention. In FIG. 4, a signal received via an antenna 101 is subjected to predetermined processing such as a frequency conversion, and the like by a radio receiving section 102. The received signal subjected to the predetermined processing is demodulated by a demodulating section 103. The demodulated signal is sent to an SIR estimating section 104 and a TPC/PL extracting section 112.

The SIR estimating section 104 estimates an RSIR from the demodulated signal. The estimated RSIR is subjected to subtraction processing with a TSIR by an adding section 105. Namely, the TSIR is subtracted from the estimated RSIR.

The subtraction result obtained by the adding section 105 is sent to an absolute value calculating section 117 and a positive/negative determining section 118. The absolute value calculating section 117 calculates an absolute value of the subtraction result sent from the adding section 105.

The positive/negative determining section 106 subtracts a threshold value set by a threshold setting section 107 from the calculation result obtained by the absolute value calculating section 117. Thereafter, it is determined whether the subtraction result is positive or negative. "1" or "0" is outputted to a multiplexing section 119, depending on whether the subtraction result is negative or negative.

While, the positive/negative determining section 118 determines whether the subtraction result is a positive value or a negative value. Then, "-1" or "1" is outputted to the multiplexing section 119, depending on whether the subtraction result from the adding section 105 is negative or negative.

The multiplexing section 119 sets TPC bit information by performing multiplication processing of an output from the positive/negative determining section 106 and an output from the positive/negative determining section 118. More specifically, when a difference between RSIR and TSIR is below the threshold value, TPC bit information is set to "0." When a difference between RSIR and TSIR is more than the threshold value, TPC bit information is set to "-1" in the case of RSIR>TSIR, and conversely "+1" in the case of RSIR<TSIR.

Whereby, in a case where the absolute difference between RSIR and TSIR is below the threshold value, TPC bit information is set to instruct a communication partner to maintain a current transmission power. Moreover, in a case where the absolute difference between RSIR and TSIR is more than the threshold value, TPC bit information is set to instruct the communication partner to decrease the transmission power in the case of RSIR>TSIR, and conversely, to instruct the communication partner to increase the transmission power in the case of RSIR<TSIR. Namely, TPC bit information is set in accordance with the difference in the absolute value between RSIR and TSIR and the relationship between RSIR and TSIR. TPC bit information set by the multiplexing section 119 is sent to a frame-constructing section 109.

The frame-constructing section 109 constructs a transmission frame including transmission data and TPC bit information set by the multiplexing section 119. More specifically, when TPC bit information from the multiplexing section 119 is "+1", an amplitude of TPC bit information in the transmission frame is set to "1", and when TPC bit information from the multiplexing section 119 is "-1", the amplitude of TPC bit information in the transmission frame is set to "-1." Moreover, when TPC bit information is "0", the amplitude of the TPC bit is set to "0."

The transmission frame thus constructed is subjected to a predetermined modulation of CDMA by a modulating section 110, and then sent to a radio transmitting section 111.

While, the TPC/PL extracting section 112 extracts a TPC bit and a PL bit from the demodulated signal. Moreover, information of extracted TPC bit is sent to a positive/negative determining section 120 from the PTC/PL extracting section 112. The positive/negative determining section 120 determines whether the amplitude of the TPC bit is positive or negative. The determination result is outputted to a gain setting section 116 to be described later.

An amplitude ratio calculating section 113 calculates a ratio (hereinafter referred to as "TPC amplitude ratio") of amplitude (absolute value) of the TPC bit to amplitude (absolute value) of the PL bit. It can be said that the larger is the TPC amplitude ratio, the higher are certainty of TPC bit and the reliability. In Addition, in this embodiment, As a method for calculating certainty of TPC bit, a method for calculating the amplitude ratio to the amplitude of the PL bit. However, the present invention is not limited to this, and it is applicable to a case in which the amplitude ratio to amplitude of any signal other than PL bit is used.

The calculated TPC amplitude ratio is subjected to subtracting processing with the threshold value sent from a threshold setting section 115 at the adding section 114. Namely, the threshold value is subtracted from the absolute value of the TPC amplitude ratio.

The gain setting section 116 sets a step gain based on the subtraction result obtained by the adding section 114 and the determination result obtained by the positive/negative determining section 120. In other words, when the subtraction result obtained by the adding section 114 is a negative number, that is, the TPC amplitude ratio is below the threshold value, the value of the gain step is set to "0." Moreover, when the subtraction result obtained by the adding section 114 is a positive number, that is, the TPC amplitude ratio is more than the threshold value and the positive and negative determining section 120 determines that amplitude of the TPC bit is a positive number, the value of the gain step is set to "+1." Conversely, when the positive and negative determining section 120 determines that amplitude of the TPC bit is a negative number, the value of the gain step is set to "-1."

As a result, when the TPC amplitude ratio, that is, certainty of TPC bit is less than the threshold value, this TPC bit is regarded as one having a low reliability, and is not used in transmission power control. In other words, the value of step gain is set to "0." Moreover, when the TPC amplitude ratio is more than the threshold value, this TPC bit is regarded as one having a high reliability, and is used in transmission power control. In other words, the value of step gain is set to "+1" or "-1" in accordance with the positive/negative of the amplitude value of TPC bit. Additionally, in this embodiment, when the amplitude value of TPC bit is positive or negative, the step gain is set to "+1" or "-1." The present invention, however, is not limited to this case, and it is applicable to a case in which a suitable change is made in accordance with various conditions. In this way, the value of the step gain is set in accordance with certainty of TPC bit.

In the above-mentioned modulated transmission frame, the current amplification value is amplified with an amount of amplification, which is increased/decreased by the step gain sent from the gain setting section 116, and transmitted via the antenna 101 at the radio transmitting section 111.

The (first) communication apparatus, which has the above-configured transmission power control apparatus, transmits the transmitting signal constructed of the transmission frame in which the amplitude of the TPC bit is 0 when the difference between RSIR and TSIR is less than the threshold value, that is, reception power is close to the proper value. The (second) communication apparatus (having the above-structured transmission power control apparatus), which has received the signal thus transmitted, recognizes the instruction to indicate that the amplitude of this TPC bit is 0, that is, to maintain the current transmission power based on the ratio of the amplitude value of TPC bit to the amplitude value of PL bit in the received signal, whereby transmitting the transmitting signal with the current transmission power, directly. This stabilizes the reception power in the first communication apparatus.

Furthermore, the communication apparatus, which has the above-configured transmission power control apparatus, determines certainty of TPC bit based on the ratio of the amplitude value of TPC bit to the amplitude value of PL bit in the received signal, and sets the step gain in accordance with the determination result, whereby making it possible to suppress the reduction in accuracy of transmission power control resulting from the TPC bit with low reliability.

In this way, according to this embodiment, the change in the TPC bit included in the transmitting signal in accordance with the difference between RSIR and TSIR allows the reception power to be controlled to an optimal value. Moreover, the setting of the step gain in accordance with certainty of the TPC bit in the received signal makes it possible to improve accuracy of transmission power control.

In addition, though the above embodiment has explained the case in which the step gain is changed in three steps according to the TPC amplitude ratio, that is, certainty of TPC, the present invention is not limited to this, and it is applicable to a case in which the step gain is changed in three and more steps according to certainty of TPC. In this case, the threshold setting section 115 should outputs two or more threshold values. This makes it possible to perform a transmission power control with more accuracy.

(Second embodiment)

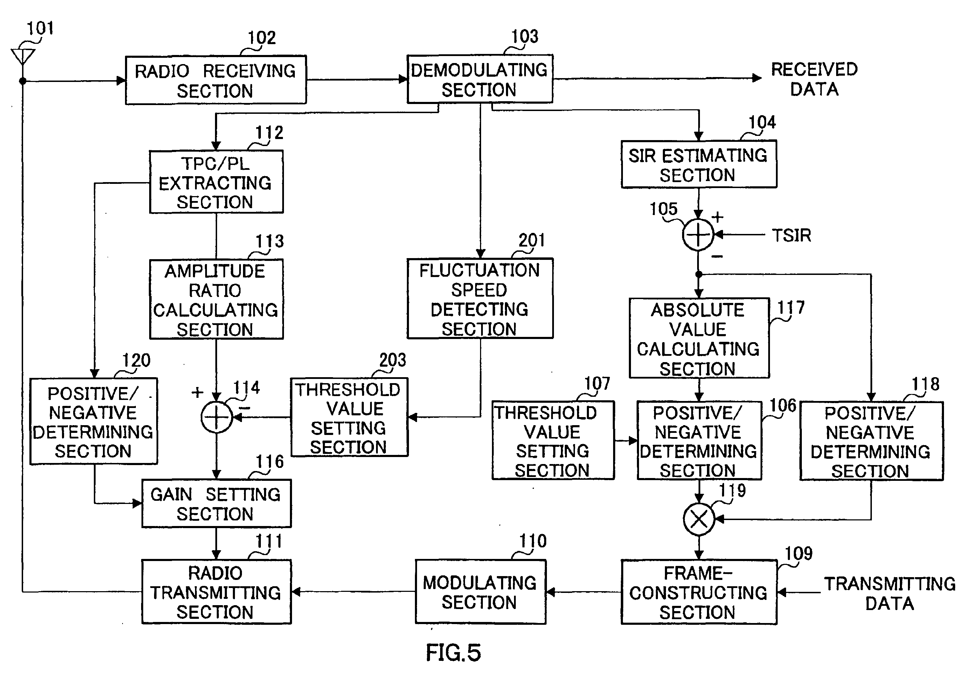

A second embodiment shows an embodiment in which the threshold value with respect to the difference between RSIR and TSIR and the threshold value with respect to the TPC amplitude value are set in accordance with the channel quality in the first embodiment. The following will explain the communication apparatus having the transmission power control apparatus according to this embodiment using FIG. 5. The same reference numerals as those of FIG. 4 are added to the same configurations as those of FIG. 4 and the specific explanation is omitted.

FIG. 5 is a block diagram showing a configuration of a communication apparatus having a transmission power control apparatus according to the second embodiment of the present invention. In FIG. 5, a fluctuation speed detecting section 201 detects a channel fluctuation speed (for example, maximum Doppler frequency) using a signal demodulated by the demodulating section 103.

The threshold setting section 107 sets a threshold value to be outputted to the positive/negative determining section 106 in accordance with the detected channel fluctuation speed. Regarding a method for changing the threshold value in accordance with the channel fluctuation speed, for example, when the maximum Doppler frequency is high, the threshold value is increased with consideration given to the point that a reception power is sometimes improved when no transmission power control is performed. Conversely, when the maximum Doppler frequency is low, the threshold value is reduced. Accordingly, when the maximum Doppler frequency is high, the frequency which amplitude of the TPC bit in the transmission frame is set to 0 is increased, whereby making it possible to prevent excessive control by the communication partner. Moreover, when the maximum Doppler frequency is low, the frequency which amplitude of the TPC bit in the transmission frame is set to 0 is decreased, so that transmission power by the communication partner is appropriately controlled. Still moreover, when the maximum Doppler frequency is close to substantially 0, it is possible to increase the threshold value to suppress the variations.

A threshold setting section 203 sets a threshold value to be outputted to the adding section 114 in accordance with the detected channel fluctuation speed. Regarding the method for changing the threshold value in accordance with the channel fluctuation speed, for example, the threshold value is set in the same manner as the case, which is performed by the threshold setting section 107.

In this way, according to the present embodiment, the threshold value with respect to the difference between RSIR and TSIR and the threshold value with respect to the TPC amplitude value are set in accordance with the channel fluctuation speed (for example, maximum Doppler frequency), whereby allowing high accurate transmission power control to be carried out as compared with the first embodiment. This makes it possible to control reception power to an optimal value regardless of the maximum Doppler frequency.

(Third embodiment)

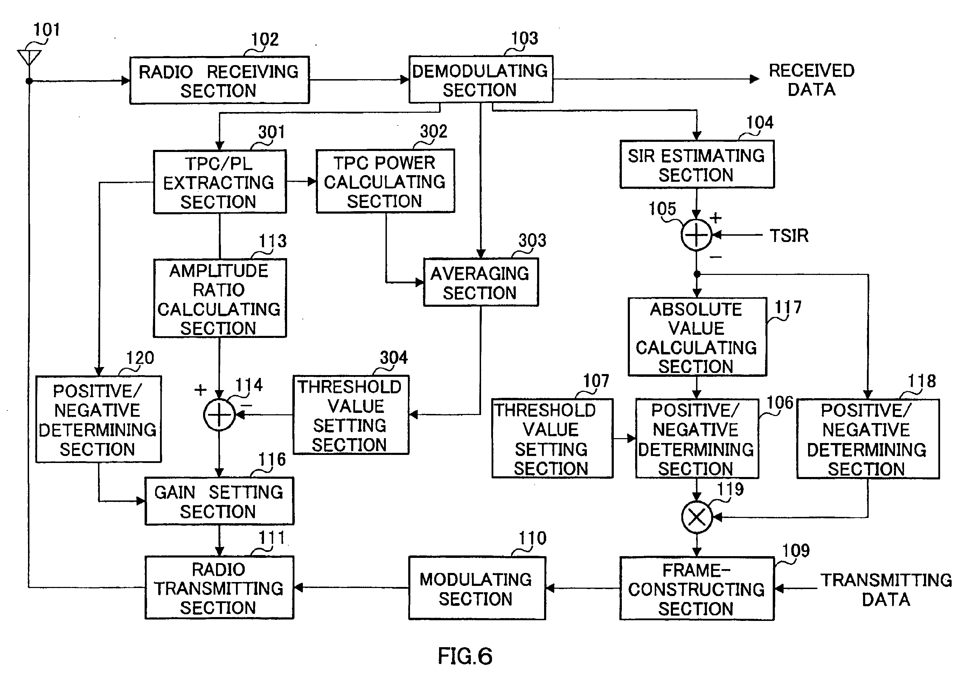

A third embodiment shows an embodiment in which the threshold value with respect to the TPC amplitude value is set in accordance with power of the received TPC bit in the first embodiment. The following will explain the communication apparatus having the transmission power control apparatus according to this embodiment using FIG. 6. The same reference numerals as those of FIG. 4 are added to the same configurations as those of FIG. 4 and the specific explanation is omitted.

FIG. 6 is a block diagram showing a configuration of a communication apparatus having a transmission power control apparatus according to the third embodiment of the present invention. In FIG. 6, a difference between a TPC/PL extracting section 301 and the TPC/PL extracting section 112 of the first embodiment lies in the point that information relating to the extracted TPC bit is outputted to a TPC power calculating section 302.

The TPC power calculating section 302 calculates power of the TPC bit using information relating to the TPC bit from the TPC/PL extracting section 301. An averaging section 303 calculates an average value of the calculated power of TPC bit.

A threshold value setting section 304 sets a threshold value to be outputted to the adding section 114 in accordance with the average value of the calculated power of TPC bit. As a method for setting the threshold value at the threshold setting section 304, one, which is set forth below, can be used.

For example, when the average value of the calculated power of TPC bits is low, it can be judged that the frequency which the signal whose amplitude of TPC bit is set to 0 by the communication partner is transmitted is high, so that the threshold value is increased. This makes it possible to increase the frequency which the step gain is set to 0 and to maintain the current transmission power without failure. Accordingly, the communication partner can obtain a desired reception power.

Conversely, when the average value of the calculated power of the TPC bits is high, it can be judged that the frequency which the signal whose amplitude of TPC bit is set to 0 by the communication partner is transmitted is low, so that the threshold value is decreased. This makes it possible to decrease the frequency which the step gain is set to 0 and to increase/decrease the current transmission power by a predetermined step gain without failure. Accordingly, the communication partner can obtain a desired reception power.

In this way, according to this embodiment, the transmission state of the TPC bit by the communication partner is determined based on the average value of power of TPC bit in the received signal, so that the setting content of the step gain can be changed in accordance with the determination result, whereby making it possible to improve the reception quality of the communication partner.

(Forth embodiment)

A fourth embodiment shows an embodiment in which the method for setting the threshold value is changed in the third embodiment. The following will explain the communication apparatus having the transmission power control apparatus according to this embodiment using FIG. 6. In addition, a difference between this embodiment and the third embodiment (FIG.6) is only the threshold setting method by the threshold setting section 304 in FIG. 6.

The threshold value setting section 304 sets a threshold value to be outputted to the adding section 114 in accordance with the average value of the calculated power of TPC bit.

As a method for setting the threshold value at the threshold setting section 304, one, which is set forth below, can be used.

For example, when the average value of the calculated power of TPC bit is more than a predetermined value, a threshold value at a current point is set to A times. Conversely, when the average value of the calculated power of TPC bit is below the predetermined value, the threshold value at the current point is set to B times. In addition, values of A and B are appropriately set with consideration given to various conditions. This changes the threshold value automatically in accordance with the magnitude of the average value of power of TPC bit.

In this way, according to this embodiment, the threshold value with respect to the TPC amplitude ratio is automatically set in accordance with the average value of power of TPC bit, that is, the reception state of the communication partner, whereby making it possible to carry out transmission power control more efficiently as compared with the third embodiment.

(Fifth embodiment)

A fifth embodiment shows an embodiment in which the method for setting the threshold value is changed in the third embodiment. The following will explain the communication apparatus having the transmission power control apparatus according to this embodiment using FIG. 6. In addition, a difference between this embodiment and the third embodiment (FIG.6) is only the threshold setting method by the threshold setting section 304 in FIG. 6.

The threshold value setting section 304 sets a threshold value to be outputted to the adding section 114 using the average value of the calculated power of TPC bit. In other words, the threshold value setting section sets a value, which can be obtained by multiplying the current threshold value by C calculated from the equation set forth below, as a new threshold value.

$$C = (a + b) / (a + X) \qquad (1)$$

where X is an average value of the calculated power of TPC bit, and a and b are values, which are appropriately decided with consideration given to various conditions.

Hereinafter, for example, an explanation is given of a state of the threshold value, which is set when a = 10 and b = 0. 5. When X = 0. 5, C = 1 is established, so that the threshold value is constant. When X = 0. 0, C = 1.05 is established, so that a new threshold value is equivalent to a value, which is obtained by multiplying the threshold value at the current point by a factor of 1.05. When X = 1. 0, C = 0.95 is established, so that a new threshold value is equivalent to a value, which is obtained by multiplying the threshold value at the current point by a factor of 0.95.

In this way, according to this embodiment, the threshold value with respect to the TPC amplitude ratio is automatically set to obtain a proper reception state of the communication partner in accordance with the average value of power of TPC bit, that is, the reception state of the communication partner, whereby making it possible to carry out transmission power control more efficiently as compared with the third embodiment.

①The transmission power control apparatus according to the present invention adopts a configuration comprising amplification quantity setting means for setting a change amplification quantity in accordance with certainty of a TPC bit in a received signal, TPC bit amplitude value changing means for changing an amplitude value of a transmitting TPC bit in accordance with a difference between a reception quality of the received signal and a reference reception quality, and transmitting means for transmitting a transmitting signal including the transmitting TPC bit whose amplitude value is changed using the amplification value obtained from the change amplification quantity.

According to this configuration, since amplitude of the TPC bit included in the transmitting signal is changed in accordance with the difference between the reception quality of the received signal and the reference reception quality, it is possible to control the reception power to an optimal value. Moreover, accuracy of transmission power control can be improved by setting the change amplification quantity in accordance with certainty of TPC bit in the received signal.

②The transmission power control apparatus according to the present invention adopts a configuration wherein the TPC bit amplitude value changing means changes the amplitude value of the transmitting TPC bit in accordance with magnitude in the difference with respect to at least one first threshold value.

According to this configuration, since the amplitude value of the transmitting TPC bit can be set to three or more kinds in accordance with the difference between the reception quality of the received signal and the reference reception quality, it is possible to control the reception power with high accuracy.

③The transmission power control apparatus according to the present invention adopts a configuration wherein the TPC bit amplitude value changing means changes the amplitude value of the transmitting TPC bit to zero when the difference is smaller than the first threshold value having a minimum value.

According to this configuration, when the difference between the reception quality of the received signal and the reference reception quality is smaller than the first threshold value having the maximum value, that is, reception power is a proper value, the amplitude value of the transmitting TPC bit is set to zero, making it possible to maintain reception power at the proper value.

④The transmission power control apparatus according to the present invention adopts a configuration wherein the TPC bit amplitude value changing means comprises channel quality detecting means for detecting a channel quality using the received signal, and varies the first threshold value in accordance with the detected channel quality.

According to this configuration, the first threshold value is changed in accordance with the channel quality (for example, channel fluctuation speed) so that the amplitude value of the transmitting TPC bit can be set to be suitable for the channel quality. This makes it possible to control reception power corresponding to the channel quality with high accuracy.

⑤The transmission power control apparatus according to the present invention adopts a configuration wherein the amplification quantity setting means sets a change amplification quantity in accordance with magnitude in certainty of TPC bit with respect to at least one second threshold value.

According to this configuration, since the change amplification quantity can be set to three or more kinds in accordance with certainty of the TPC bit in the received signal, it is possible to control the transmission power with high accuracy.

⑥The transmission power control apparatus according to the present invention adopts a configuration wherein the amplification quantity setting means sets a change amplification quantity to zero when certainty of the TPC bit is smaller than the second threshold value having a minimum value.

According to this configuration, when certainty of TPC bit in the received signal is smaller than the second threshold value having the maximum value, that is, reliability of this TPC bit is low, the change amplification quantity is set to zero, making it possible to improve accuracy of transmission power control.

⑦The transmission power control apparatus according to the present invention adopts a configuration wherein the amplification quantity setting means comprises channel quality detecting means for detecting a channel quality using the received signal, and varies the second threshold value in accordance with the detected channel quality.

According to this configuration, the second threshold value is changed in accordance with the channel quality (for example, channel fluctuation speed) so that the amplitude change quantity can be set to be suitable for the channel quality. This makes it possible to control transmission power corresponding to the channel quality with high accuracy.

⑧The transmission power control apparatus according to the present invention adopts a configuration wherein the amplification quantity setting means comprises power calculating means for calculating power of the TPC bit and varies the second threshold value based on the calculated power.

According to this configuration, since the second threshold value can be changed in accordance with the transmission state of the TPC bit of the communication partner, the amplification change quantity is set to zero without failure at the time of transmitting the signal whose amplitude of TPC bit is set to 0 by the communication partner, and the amplification change quantity can be increased or decreased without failure when the communication partner sets amplitude of the TPC bit to positive or negative. This makes it possible for the communication partner to obtain a desired reception power.

⑨The transmission power control apparatus according to the present invention adopts a configuration wherein the amplification quantity setting means varies the second threshold value in accordance with magnitude in the average value of the power with respect to a reference value.

According to this configuration, since the second threshold value is changed in accordance with magnitude in the average value of power of the TPC bit with respect to a certain reference value, it is possible to recognize the setting state of the amplitude value of the TPC bit by the communication partner without failure. This makes it possible to carry out such transmission power control that the communication partner can obtain a desired reception power without failure.

⑩ The transmission power control apparatus according to the present invention adopts a configuration wherein the amplification quantity setting means uses a ratio of amplitude of the TPC bit to amplitude of the signal other than the TPC bit in the received signal as certainty of the TPC bit.

According to this configuration, the ratio of amplitude of TPC bit to amplitude of the signal other than the TPC bit in the received signal is used as an index, making it possible to judge certainty of the TPC bit without failure.

⑪ The transmission power control apparatus according to the present invention adopts a configuration wherein the TPC bit amplitude value changing means uses an SIR as a reception quality.

According to this configuration, the SIR is used as an index of reception quality, making it possible to judge the reception quality of the received signal without failure.

⑫ The communication terminal apparatus according to the present invention has a transmission power control apparatus and the transmission power control apparatus adopts a configuration comprising amplification quantity setting means for setting a change amplification quantity in accordance with certainty of a TPC bit in a received signal; TPC bit amplitude value changing means for changing an amplitude value of a transmitting TPC bit in accordance with a difference between a reception quality of the received signal and a reference reception quality; and transmitting means for transmitting a transmitting signal including the transmitting TPC bit whose amplitude value is changed using the amplification value obtained from the change amplification quantity.

According to this configuration, the provision of the transmission power control apparatus for controlling reception power and transmission power to optimal values in accordance with the channel quality makes it possible to provide the communication terminal apparatus, which can perform favorable communication.

⑬ The based station apparatus according to the present invention has a transmission power control apparatus and the transmission power control apparatus adopts a configuration comprising amplification quantity setting means for setting a change amplification quantity in accordance with certainty of a TPC bit in a received signal, TPC bit amplitude value changing means for changing an amplitude value of a transmitting TPC bit in accordance with a difference between a reception quality of the received signal and a reference reception quality, and transmitting means for transmitting a transmitting signal including the transmitting TPC bit whose amplitude value is changed using the amplification value obtained from the change amplification quantity.

According to this configuration, the provision of the transmission power control apparatus for controlling reception power and transmission power to optimal values in accordance with the channel quality makes it possible to provide the base station apparatus, which can perform favorable communication.

⑭ The transmission power control method according to the present invention comprises the amplification quantity setting step of setting a change amplification quantity in accordance with certainty of a TPC bit in a received signal, the TPC bit amplitude value changing step of changing an amplitude value of a transmitting TPC bit in accordance with a difference between a reception quality of the received signal and a reference reception quality, and the transmitting step of transmitting a transmitting signal including the transmitting TPC bit whose amplitude value is changed using the amplification value obtained from the change amplification quantity.

According to this configuration, since amplitude of the TPC bit included in the transmitting signal is changed in accordance with the difference between the reception quality of the received signal and the reference reception quality, it is possible to control the reception power to an optimal value. Moreover, accuracy of transmission power control can be improved by setting the change amplification quantity in accordance with certainty of TPC bit in the received signal.

As explained above, according to the present invention, since the amplification value of the transmitting signal is changed in accordance with certainty of the TPC bit in the received signal, and amplitude of the TPC bit included in the transmitting signal is changed in accordance with the difference between the reception quality of the received signal and the reference reception quality, it is possible to provide the transmission power control apparatus for controlling reception power and transmission power to optimal values in accordance with the channel quality.

This application is based on the Japanese Patent Application No. HEI 11-177359 filed on June 23, 1999, entire content of which is expressly incorporated by reference herein.

Industrial Applicability

This invention is suitable for use in the CDMA mobile communication field.

**Claims**

1. A transmission power control apparatus comprising:

    amplification quantity setting means for setting a change amplification quantity in accordance with certainty of a TPC bit in a received signal; TPC bit amplitude value changing means for changing an amplitude value of a transmitting TPC bit in accordance with a difference between a reception quality of the received signal and a reference reception quality; and transmitting means for transmitting a transmitting signal including the transmitting TPC bit whose amplitude value is changed using an amplification value obtained from the change amplification quantity.

2. The transmission power control apparatus according to claim 1, wherein the TPC bit amplitude value changing means changes the amplitude value of the transmitting TPC bit in accordance with magnitude in the difference with respect to at least one first threshold value.

3. The transmission power control apparatus according to claim 2, wherein the TPC bit amplitude value changing means changes the amplitude value of the transmitting TPC bit to zero when the difference is smaller than the first threshold value having a minimum value.

4. The transmission power control apparatus according to claim 2, wherein the TPC bit amplitude value changing means comprises channel quality detecting means for detecting a channel quality using the received signal, and varies the first threshold value in accordance with the detected channel quality.

5. The transmission power control apparatus according to claim 1, wherein the amplification quantity setting means sets the change amplification quantity in accordance with magnitude in certainty of the TPC bit with respect to at least one second threshold value.

6. The transmission power control apparatus according to claim 5, wherein the amplification quantity setting means sets a change amplification quantity to zero when certainty of the TPC bit is smaller than the second threshold value having a minimum value.

7. The transmission power control apparatus according to claim 5, wherein the amplification quantity setting means comprises channel quality detecting means for detecting a channel quality using the received signal, and varies the second threshold value in accordance with the detected channel quality.

8. The transmission power control apparatus according to claim 5, wherein the amplification quantity setting means comprises power calculating means for calculating power of TPC bit and varies the second threshold value based on the calculated power.

9. The transmission power control apparatus according to claim 8, wherein the amplification quantity setting means varies the second threshold value in accordance with magnitude in the average value of the power with respect to a reference value.

10. The transmission power control apparatus according to claim 1, wherein the amplification quantity setting means uses a ratio of amplitude of the TPC bit to amplitude of the signal other than the TPC bit in the received signal as certainty of the TPC bit.

11. The transmission power control apparatus according to claim 1, wherein the TPC bit amplitude value changing means uses an SIR as a reception quality.

12. A communication terminal apparatus having a transmission power control apparatus, the transmission power control apparatus comprising:

amplification quantity setting means for setting a change amplification quantity in accordance with certainty of a TPC bit in a received signal; TPC bit amplitude value changing means for changing an amplitude value of a transmitting TPC bit in accordance with a difference between a reception quality of the received signal and a reference reception quality; and transmitting means for transmitting a transmitting signal including the transmitting TPC bit whose amplitude value is changed using an amplification value obtained from the change amplification quantity.

13. A based station apparatus having a transmission power control apparatus, the transmission power control apparatus comprising:

amplification quantity setting means for setting a change amplification quantity in accordance with certainty of a TPC bit in a received signal; TPC bit amplitude value changing means for changing an amplitude value of a transmitting TPC bit in accordance with a difference between a reception quality of the received signal and a reference reception quality; and transmitting means for transmitting a transmitting signal including the transmitting TPC bit whose amplitude value is changed using an amplification value obtained from the change amplification quantity.

14. A transmission power control method comprising:

the amplification quantity setting step of setting a change amplification quantity in accordance with certainty of a TPC bit in a received signal; the TPC bit amplitude value changing step of changing an amplitude value of a transmitting TPC bit in accordance with a difference between a reception quality of the received signal and a reference reception quality; and

the transmitting step of transmitting a transmitting signal including the transmitting TPC bit whose amplitude value is changed using an amplification value obtained from the change amplification quantity.

FIG.1

EP 1 107 482 A1

RECEPTION
POWER

TIME

FIG.2

EP 1 107 482 A1

EXCESSIVE CONTROL

RECEPTION SIR (WITH POWER CONTROL)

RECEPTION SIR (WITHOUT POWER CONTROL)

TARGET SIR

t3

FIG.3

EP 1 107 482 A1

FIG.4

EP 1 107 482 A1

FIG.5

EP 1 107 482 A1

FIG.6

EP 1 107 482 A1

<div style="text-align:center">**INTERNATIONAL SEARCH REPORT**</div>

| International application No. |
| --- |
| PCT/JP00/03873 |

**A. CLASSIFICATION OF SUBJECT MATTER**
Int.Cl$^7$   H04B7/26, 102

According to International Patent Classification (IPC) or to both national classification and IPC

**B. FIELDS SEARCHED**

Minimum documentation searched (classification system followed by classification symbols)
Int.Cl$^7$   H04B7/24-7/26, 102
        H04Q7/00-7/38

Documentation searched other than minimum documentation to the extent that such documents are included in the fields searched
Jitsuyo Shinan Koho        1922-1996   Toroku Jitsuyo Shinan Koho  1994-2000
Kokai Jitsuyo Shinan Koho  1971-2000   Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 10-126337, A (Mitsubishi Electric Corporation), 15 May, 1998 (15.05.98) & US, 5924043, A | 1-14 |
| A | JP, 8-307343, A (Oki Electric Industry Co., Ltd.), 22 November, 1996 (22.11.96)   (Family: none) | 1-14 |

| ☐ | Further documents are listed in the continuation of Box C. | ☐ | See patent family annex. |
| --- | --- | --- | --- |

\* Special categories of cited documents:
"A"  document defining the general state of the art which is not considered to be of particular relevance
"E"  earlier document but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| 12 September, 2000 (12.09.00) | 26 September, 2000 (26.09.00) |

| Name and mailing address of the ISA/ | Authorized officer |
| --- | --- |
| Japanese Patent Office | |
| Facsimile No. | Telephone No. |

Form PCT/ISA/210 (second sheet) (July 1992)